# DEMANDE DE BREVET EUROPEEN

(11) **EP 0 521 362 A1**
(43) Date de publication de la demande: **07.01.1993**
(21) Numéro de dépôt: 92110443.6
(22) Date de dépôt: 20.06.1992
(51) Int. Cl.: A61C 5/02

(54) **Instrument pour l'art dentaire servant au traitement des canaux radiculaires**

(30) Priorité: 02.07.1991 CH 1958/91
(71) Demandeur: MAILLEFER INSTRUMENTS S.A., CH-1338 Ballaigues (CH)
(72) Inventeur: Randin, Jean-Claude, CH-1338 Ballaigues (CH)
(74) Mandataire: Robert, Jean S.

(57) **Abrégé**

La tige (1) de l'instrument présente quatre rampes hélicoïdales (2) ménageant des arêtes hélicoïdales de coupe (3) tournant dans un sens, et quatre rampes hélicoïdales (4), ménageant des arêtes hélicoïdales de coupe (5), tournant en sens inverse. En conséquence, les arêtes (3 et 5) se coupent les unes les autres, ce qui améliore l'efficacité de l'instrument utilisé comme lime.

## Description

La présente invention a pour objet un instrument pour l'art dentaire, tel que broche ou lime, servant au traitement des canaux radiculaires, comprenant une tige effilée présentant au moins une arête de coupe hélicoïdale.

La différence entre les broches et les limes réside dans le fait que les secondes sont utilisées en un mouvement de va-et-vient, comme leur nom l'indique, alors que les premières sont supposées être utilisées comme des forets, en un mouvement rotatif, à la différence, cependant, que les forets effectuent un mouvement rotatif continu dans un sens alors que, dans le cas des broches servant au traitement des canaux radiculaires, le praticien n'imprime, manuellement, que des fractions de tours à l'instrument, retirant ce dernier avec les déchets que l'opération aura produits, entre chaque rotation.

Cependant, dans la pratique, il se révèle que les praticiens utilisent fréquemment les broches comme si elles étaient des limes, c'est-à-dire en leur imprimant un mouvement de va-et-vient, voire en combinant un tel mouvement de va-et-vient avec un mouvement rotatif.

Compte tenu de cette réalité, il est apparu qu'il serait avantageux de faire en sorte que cette utilisation non orthodoxe des broches soit efficace. La présente invention fournit, grâce aux moyens définis dans la revendication 1, une solution à ce problème.

Au surplus, l'invention, appliquée non plus aux broches mais aux limes, en améliore également l'efficacité. Elle se révèle donc avoir un effet favorable dans les deux cas.

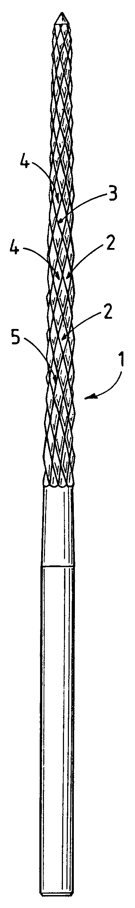

Le dessin représente, à titre d'exemple, une forme d'exécution de l'objet de l'invention.

La figure unique est une vue en élévation, à l'échelle 10 : 1 d'une lime pour le traitement des canaux radiculaires.

L'instrument représenté comprend une tige effilée 1 présentant quatre rampes hélicoïdales 2, formant quatre arêtes hélicoïdales de coupe 3, tournant dans un sens.

Cet instrument présente en outre quatre autres rampes hélicoïdales 4, formant quatre arêtes hélicoïdales de coupe 5, tournant en sens inverse des rampes 2. Il en résulte que l'ensemble des arêtes 3 coupe l'ensemble des arêtes 4.

Grâce aux doubles rampes hélicoïdales, et aux doubles arêtes de coupe, la broche peut être utilisée en tant que lime, en un mouvement de va-et-vient, au cours duquel se produit un grattage de la paroi du canal radiculaire et un enlèvement de matière.

L'invention n'est pas limitée au type d'instrument représenté au dessin. Elle pourra s'appliquer à des instruments pour le traitement des canaux radiculaires comprenant moins de quatre arêtes hélicoïdales de coupe, à des instruments dont les arêtes de coupe seront plus ou moins serrées que dans l'exemple représenté, ou encore à des instruments dont l'angle d'ouverture de la conicité ira en grandissant de la pointe de l'instrument en direction du manche, et dont la partie active présentera ainsi une certaine concavité.

## Revendications

1. Instrument pour l'art dentaire tel que broche ou lime, servant au traitement des canaux radiculaires, comprenant une tige effilée présentant au moins une arête hélicoïdale de coupe, tournant dans un sens, caractérisé par le fait qu'il comprend au moins une seconde arête hélicoïdale de coupe, tournant en sens inverse à celui de la première et se croisant avec celle-ci.

2. Instrument pour l'art dentaire suivant la revendication 1, caractérisé par le fait que sa tige effilée présente quatre arêtes hélicoïdales de coupe tournant dans un sens, et quatre arêtes hélicoïdales de coupe tournant en sens inverse de celui des quatre premières et se croisant avec celles-ci.
